Europäisches Patentamt

European Patent Office

Office européen des brevets

Veröffentlichungsnummer: **0 272 443**

**A2**

# EUROPÄISCHE PATENTANMELDUNG

Anmeldenummer: **87116851.4**

Int. Cl.⁴ **H01R 25/16**

Anmeldetag: **14.11.87**

Priorität: **20.12.86 DE 8634217 U**

Veröffentlichungstag der Anmeldung:
**29.06.88 Patentblatt 88/26**

Benannte Vertragsstaaten:
**AT DE ES GB GR NL SE**

Anmelder: **Gebr. Vedder GmbH**

**D-5885 Schalksmühle(DE)**

Erfinder: **Scholz, Manfred**
**Asenbach 29**
**D-5885 Schalksmühle(DE)**
Erfinder: **Balzer, Manfred**
**Versestrasse 35a**
**D-5880 Lüdenscheid(DE)**
Erfinder: **Hackenberg, Erich**
**Berliner Allee 68**
**D-5800 Hagen 5(DE)**

Vertreter: **Sonnet, Bernd et al**
**Stresemannstrasse 6-8 Postfach 20 13 27**
**D-5600 Wuppertal 2(DE)**

## Elektrisches Installationsgerät.

Dargestellt und beschrieben ist ein elektrisches Installationsgerät wie Schalter, Taster, Steckdose od.dgl. mit einem Geräteeinsatz mit Tragring (19), einem Funktions-bzw. Bedienelement (z.B. Steckdoseneinsatz 22) und einer im wesentlichen rahmenförmigen Abdeckung (26). Zur Verwendung dieses Installationsgerätes in Brüstungskanälen (10) ist das Funktions-bzw. Bedienelement (z.B. Steckdoseneinsatz 22) auf einem mit dem Tragring (19) lösbar verbindbaren Adapterring (20) abstützbar, der seinerseits mit Halterungen zum wiederlösbaren Aufrasten der Abdeckung (26) ausgerüstet ist. Ferner ist die auf der Deckplatte (12) des Brüstungskanals (10) aufliegende Abdeckung (26) derart flach gehalten, daß ihre äußere Ansichtsfläche im wesentlichen bündig mit der äußeren Ansichtsfläche des Funktionselements abschließt, während der Tragring (19) des Geräteeinsatzes (17) noch unterhalb der Innenseite der montierten Brüstungskanal-Deckplatte (12) verbleibt. Damit wird erreicht, daß keine besonderen Deckplatten (12) oder Deckplattenabschnitte mit vorbereiteten Bohrungen benutzt werden müssen. Vielmehr genügt es, am Ort der Anbringung des erfindungsgemäßen Installationsgeräts die gewünschte Ausnehmung mit einem Kreisschneider oder einer Lochsäge in die Deckplatte einzubringen.

FIG.1

## Elektrisches Installationsgerät

Die Erfindung bezieht sich auf ein elektrisches Installationsgerät wie Schalter, Taster, Steckdose od.dgl. mit einem Geräteeinsatz mit Tragring, einem Funktions-bzw. Bedienelement und einer im wesentlichen rahmenförmigen Abdeckung. Derartige Installationsgeräte, insbesondere zur Unterputzinstallation, sind allgemein geläufig und daher bekannt.

Die Anordnung und Verkabelung elektrischer Installationsgeräte geschieht auch in zunehmendem Maße in sogenannten Brüstungskanälen, die an der Wand entlang verlegt werden und es gestatten, an nahezu beliebigen Stellen jederzeit, d.h. auch nachträglich, Schalter, Steckdosen, Taster, Anschlußdosen und sonstige Installationsgeräte montieren zu können. Brüstungskanäle bestehen in der Regel aus einem extrudierten, kürzbaren U-Profil, welches mit dem Mittelsteg an der Wand befestigt wird und dessen offene U-Seite mit einer Deckplatte verschlossen wird. Will man nun an einer vorbestimmten Stelle im Brüstungskanal beispielsweise einen Schalter einbauen, muß die Deckplatte abgeschnitten und für die Montage des Schalters eine spezielle Zwischenplatte verwendet werden. Diese Zwischenplatte enthält den notwendigen Montageausschnitt. Da wahlweise ein einzelnes Installationsgerät oder Installationsgeräte in Mehrfachanordnung, runde oder rechteckige Geräte montiert werden können, gibt es eine große Vielzahl solcher Deckplattenabschnitte. Abgesehen von der aufwendigen Lagerhaltung und den Schwierigkeiten bei der Bestellung solcher abgestimmter Deckplattenabschnitte ist die Montage unmittelbar an der Baustelle schwierig und unbefriedigend. Dies rührt daher, daß die Deckplatte an derjenigen Stelle, an der ein besonderer Deckplattenabschnitt angebracht werden soll, abzusägen ist. Dies ist zwar auf einer Maschine, die über einen exakten Anschlag verfügt, kein Problem, doch stehen solche Maschinen an der Baustelle nicht zur Verfügung, so daß von Hand gesägt werden muß. Ein sauberer, exakt rechtwinkliger Schnitt ist folglich reine Glücksache und kann daher regelmäßig nicht erwartet werden. Die Trennfugen zwischen den einzelnen Deckplattenabschnitten sind also stets mehr oder weniger störend sichtbar.

Die notwendigen speziellen Ausschnitte in den Deckplattenabschnitten sind deshalb notwendig, weil sie den Durchtritt des Tragrings des Geräteeinsatzes erlauben müssen, derart, daß dieser mit seiner Unterfläche etwa in Flucht zur äußeren Oberfläche der Brüstungskanaldeckplatte zu liegen kommt, also in einer gleichen Zuordnung wie der Tragring eines unter Putz installierten Geräteeinsatzes zur Wandoberfläche liegt.

Der Erfindung liegt hiervon ausgehend die Aufgabe zugrunde, ein elektrisches Installationsgerät mit einfachen Mitteln derart weiterzubilden, daß es sich in besonderer Weise zum Einsatz in Brüstungskanälen eignet, bei denen keine speziellen Deckplattenabschnitte mehr verwendet werden müssen.

Die Erfindung löst diese Aufgabe dadurch, daß zur Verwendung des Installationsgeräts in Brüstungskanälen das Funktionsbzw. Bedienelement auf einem mit dem Tragring lösbar verbindbaren Adapterring abstützbar ist, der seinerseits mit Halterungen zum wiederlösbaren Aufrasten der Abdeckung ausgerüstet ist und daß die auf der Deckplatte des Brüstungskanals aufliegende Abdeckung derart flach gehalten ist, daß ihre äußere Ansichtsfläche im wesentlichen bündig mit der äußeren Ansichtsfläche des Funktionselements abschließt, während der Tragring des Geräteeinsatzes noch unterhalb der Innenseite der montierten Brüstungskanal-Deckplatte verbleibt.

Weitere Ausgestaltungen und Weiterbildungen sind in den Unteransprüchen angegeben.

Am Ort der Anbringung des erfindungsgemäßen Installationsgerätes genügt es, mit einem Kreisschneider oder einer Lochsäge eine Ausnehmung in die Deckplatte einzubringen, deren Rand nicht einmal sauber zu sein braucht, sondern der lediglich von einem vorstehenden Teil des Installationsgeräts, so also beispielsweise von dem Funktions-oder Bedienelement durchgriffen werden kann. Im übrigen wird diese Ausnehmung nach Beendigung der Montage von der rahmenförmigen Abdeckung abgedeckt. Die beanspruchte Ausgestaltung macht es nicht mehr erforderlich, den Tragring des Geräteeinsatzes bis zur äußeren Oberfläche der Deckplatte vorzuziehen. Trotzdem wird erreicht, daß das Funktions-bzw. Bedienelement (Steckdoseineinsatz, Taster, Schalterwippe od.dgl.) einen exakt definierten Abstand zur elektrischen Einrichtung im Geräteeinsatz erhält und andererseits vermittels des Adapterrings einen exakt definierten Abstand zur äußeren Oberfläche der rahmenförmigen Abdeckung.

Die sich aus der Erfindung ergebenden Vorteile sind vielfältig und bedeutsam. Das elektrische Installationsgerät läßt sich innerhalb der einfachen, in die Deckplatte des Brüstungskanals eingebrachten Ausnehmung zum Zwecke der Ausrichtung leicht verschieben und damit justieren. Da die Abdeckung mit dem Adapterring lediglich steckverrastet wird, kann sie auf einfache Weise ohne Zuhilfenahme von Werkzeugen auch wieder entfernt werden. Hieraus resultiert der weitere Vorteil, daß der Brüstungskanal ebenfalls in der Regel ohne Zuhilfenahme von Werkzeugen jederzeit geöffnet werden kann. Es brauchen lediglich die an der zu entfernenden Brüstungskanal-Deckplatte befindlichen Abdeckungen der einzelnen Installtionsgeräte abgezogen zu werden, woraufhin die Deckplatte entfernbar ist. Besonders wird hierdurch die nachträgliche Bestückung mit zusätzlichen Installationsgeräten erleichtert. Auch braucht der Handwerker nicht auf vorgefertigte, einzeln zu bestellende Sonder-Deckplattenabschnitte zurückzugreifen. Er hat lediglich am bestimmungsgemäßen Ort des Einbaus des zusätzlichen Installationsgerätes ein einfaches Loch in die Brüstungskanal-Deckplatte einzubringen. Die bisher zum Einbau in Brüstungskanäle verwendeten Elektroinstallationsgeräte konnten nur mit Hilfe eines Schraubendrehers durch Lösen von Schrauben teilweise demontiert werden. Im übrigen traten die auf der äußeren Ansichtsfläche der Brüstungskanal-Deckplatte liegenden Teile stark hervor. Demgegenüber erlaubt die Erfindung nunmehr auch eine optisch wesentlich ansprechendere und gefälligere Gestaltung.

Die Erfindung versteht sich im übrigen am besten anhand der nachfolgenden Beschreibung eines in den Zeichnungen dargestellten Ausführungsbeispiels. In den Zeichnungen zeigen:

Fig. 1 eine querschnittliche Explosionsdarstellung eines in einem Brüstungskanal anzuordnenden Installtionsgeräts - hier einer Steckdose - und

Fig. 2 eine schaubildliche Ansicht eines Ausschnitts der Brüstungskanaldeckplatte.

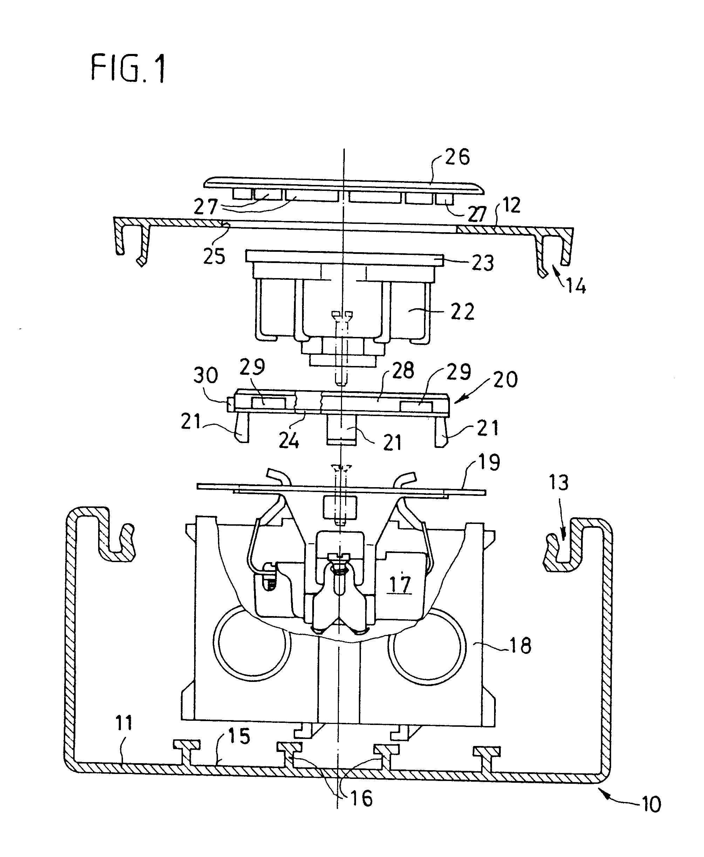

Der in Fig. 1 dargestellte Brüstungskanal 10 besteht aus einem im Querschnitt im wesentlichen U-förmigen Extrusionsprofil 11 und einer ebenfalls extrudierten Abdeckplatte 12, die mit Hilfe von an diesen beiden Teilen angebrachten Rastelementen 13, 14 lösbar miteinander zu verbinden sind. An der Bodeninnenseite 15 des Extrusionsprofiles 11 befinden sich Haltestege 16 zur verschieblichen Verankerung von Elektroinstallationsgeräte 17 aufnehmenden Installationsdosen 18. Dies alles ist Stand der Technik und soll daher nicht weiter erläutert werden.

Das in Fig. 1 dargestellte Elektroinstallationsgerät 17 ist eine Schuko-Steckdose und umfaßt in herkömmlicher Weise einen zumeist aus Metall bestehenden Tragring 19.

Mit 20 ist ein spezieller Adapterring bezeichnet, der mittels mehrerer Rastfüßen 21 wiederlösbar mit dem Tragring 19 steckverrastbar ist. Der Adapterring 20 wird von dem Funktionsbzw. Bedienelement des Installationsgeräts - hier von einem Steckdoseneinsatz 22 durchgriffen. Dabei ist die Anordnung so getroffen, daß sich der äußere Bund 23 des Steckdoseneinsatzes 22 mit seiner Unterfläche auf der Oberfläche eines umlaufenden Innenkragens 24 des Adapterringes 20 abstützt. Da der Tragring 19 in einer definierten Zuordnung zum Geräteeinsatz 17 montiert ist, der Adapterring 20 wiederum in bestimmter Zuordnung zum Tragring 19, führt diese wiederum definierte Abstützung zu einer räumlich exakt bestimmten Zuordnung des in den Steckdoseneinsatz 22 einzusteckenden Steckers zu den elektrisch leitenden Teilen der Steckdose. Diese Zuordnung wird auch für sämtliche anderen Bedien-und Funktionselemente wie Schalterwippen, Tasterwippen od.dgl. erzielt, die sich gleichfalls mit ihrer jeweiligen Unterseite (z.B. Wippenlager) auf dem Innenkragen 24 des Adapterringes 20 abstützen.

Zum Zwecke des äußeren Zugriffs ist in die Fläche der Deckplatte 12 ein einfacher, insbesondere kreisrunder 25 einzubringen, der bei Bedarf mit einer Lochsäge oder einem Kreisschneider auf einfache Weise gefertigt werden kann. Sein Durchmesser muß so groß sein, daß die nach außen tretenden Teile des Geräts hindurchgreifen können. In vorliegendem Falle ist der äußere Durchmesser des Adapterringes 20 zu berücksichtigen, der in der Endmontagestellung in die Ausnehmung 25 greift.

Der Ausschnitt 25 wird nach außen hin mittels einer im wesentlichen rahmenförmigen Abdeckung 26 kaschiert. Umfänglich des inneren Durchbruchs der Abdeckung 26 sind eine Mehrzahl von Rastzungen 27 angeordnet, die den Außenumfang des Bundes 28 des Adapterringes 20 umgreifen und dort in Rastausnehmungen 29 einrasten. Eine mit 30 bezeichnete Nase am Außenumfang des Bundes 28 dient zur lagegerechten Umfangszentrierung der Abdeckung 26 in Relation zum Adapterring 20.

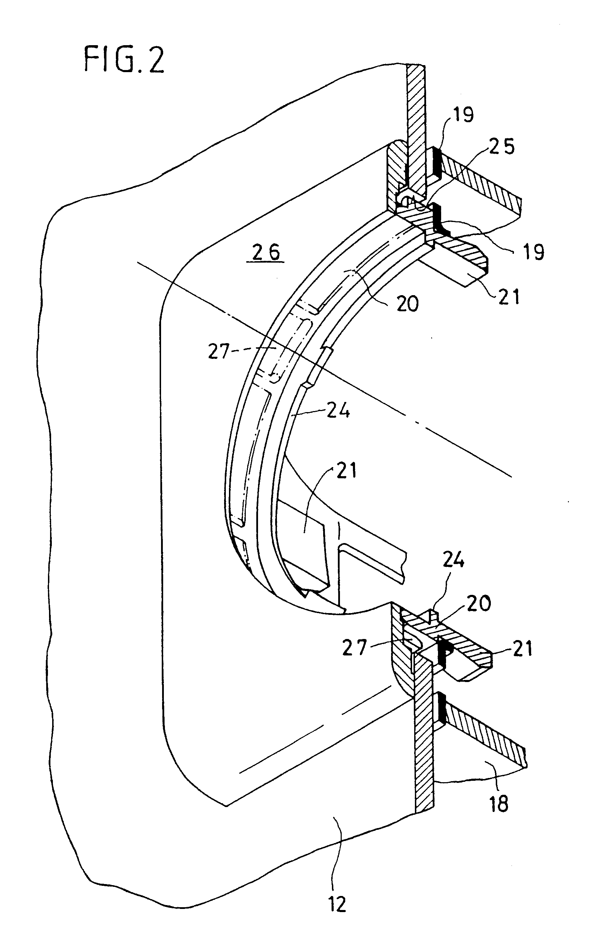

Fig. 2 veranschaulicht insbesondere die Zuordnung der Abdeckung 26 zur Brüstungskanal-Deckplatte 12 und zum Adapterring 20 sowie dessen Zuordnung zum Tragring 19 und der Installationsdose 18. Aus Fig. 2 ist auch die sehr flache Ausbildung der Abdeckung 26 erkennbar, die einerseits ein ästhetisch ansprechendes Erscheinungsbild garantiert und es andererseits ermöglicht, das Installtionsgerät bzw. die Gerätedose 18 noch unterhalb der inneren Unterfläche der Brüstungskanal-Deckplatte 12 unterzubringen. Denn diese nach innen versetzte Unterbringung erreicht den Hauptzweck der Erfindung, Elektroinstallationsgeräte in Brüstungskanälen installieren zu können, wobei man in der Brüstungskanal-Deckplatte lediglich einfache Löche bedarfsweise vorsehen kann.

## Ansprüche

1. Elektrisches Installationsgerät wie Schalter. Taster. Steckdose od.dgl. mit einem Geräteeinsatz mit Tragring. einem Funktions- bzw. Bedienelement und einer im wesentlichen rahmenförmigen Abdeckung, dadurch gekennzeichnet, daß zur Verwendung des Installationsgeräts in Brüstungskanälen (10) das Funktions- bzw. Bedienelement (z.B. Steckdoseneinsatz 22) auf einem mit dem Tragring (19) lösbar verbindbaren Adapterring (20) abstützbar ist, der seinerseits mit Halterungen zum wiederlösbaren Aufrasten der Abdeckung (26) ausgerüstet ist und daß die auf der Deckplatte (12) des Brüstungskanals (10) aufliegende Abdeckung (26) derart flach gehalten ist. daß ihre äußere Ansichtsfläche im wesentlichen bündig mit der äußeren Ansichtsfläche des Funktionselements abschließt. während der Tragring (19) des Geräteeinsatzes (17) noch unterhalb der Innenseite der montierten Brüstungskanal-Deckplatte (12) verbleibt.

2. Installationsgerät nach Anspruch 1, dadurch gekennzeichnet. daß der Adapterring (20) Rastzungen (21) zur Steckverbindung mit dem Tragring (19) aufweist.

3. Installationsgerät nach Anspruch 1 oder 2. dadurch gekennzeichnet. daß der Adapterring (20) mit einem im wesentlichen umlaufenden Innenkragen (24) zur Abstützung des Funktions- oder Bedienelements versehen ist.

4. Installationsgerät nach Anspruch 1. dadurch gekennzeichnet. daè die Abdeckung (26) umfänglich ihres inneren Durchbruchs mit Rastzungen (27) zur lösbaren Verankerung am Adapterring (20) versehen ist.

5. Installationsgerät nach Anspruch 4. dadurch gekennzeichnet. daß zur Verankerung der Rastzungen (27) umfänglich eines Bundes (28) des Adapterrings (20) Rastausnehmungen (29) angeordnet sind.

## FIG.1

# FIG.2